Europäisches Patentamt

European Patent Office

Office européen des brevets

(11) Publication number: **0 242 990**
**A2**

# EUROPEAN PATENT APPLICATION

(21) Application number: 87302412.9

(22) Date of filing: 20.03.87

(51) Int. Cl.⁴: **A01N 37/16**

(30) Priority: 21.03.86 GB 8607035

(43) Date of publication of application:
28.10.87 Bulletin 87/44

(84) Designated Contracting States:
AT BE CH DE ES FR GB GR IT LI LU NL SE

(71) Applicant: **Albright & Wilson Limited**
**Albright & Wilson House Hagley Road West**
**Oldbury Warley West Midlands, B68**
**ONN(GB)**

(72) Inventor: **Langford, Philip Webster**
**17 Ellacombe Road**
**Longwell Green Bristol BS15 6BQ(GB)**

(74) Representative: **Hamilton, Raymond et al**
**c/o Albright & Wilson Limited 1**
**Knightsbridge Green**
**London SW1X 7QD(GB)**

(54) Crop treatment processes.

(57) Peracetic acid and perpronionic acid are useful in the treatment of growing plants in order to control the growth of adventitious organisms. They are especially effective in controlling the growth of fungi and microbial plant pathogens. The acids are especially useful in the treatment of edible crops since they do not leave a toxic residue on the surface of the plant.

EP 0 242 990 A2

## Crop Treatment Processes

This application relates to novel processes for the treatment of growing plants in order to control the growth of adventitious organisms:

The biocidal properties of peracetic acid and perpropionic acid are well known. Peracetic acid in particular is know to be useful as a disinfectant fungicide and virucide (as is described for example in our British Patent Application 2152377) and has been proposed for use in the of treatment of plant tubers and for the sterilisation of soil.

We have now discovered that these percarboxylic acids can be used to treat growing plants in order to kill or control the growth of adventitious organisms on the plant without unduly restricting the growth of the plant and without the formation of toxic residues on the plant.

Thus from one aspect our invention provides a process for the treatment of growing plants in order to combat the growth of adventitious organisms which comprises treating the plant with an effective quantity of peracetic acid or perpropionic acid.

The percarboxylic acids have been discovered to exhibit little or no phytoxicity and are especially suitable for use on edible crops in view of the fact that in use the peracids decompose to a naturally occuring acid and water and thereby does not lead to the formation of any toxic chemical residues on the plant. Their use thereby avoids the need to wash the crop or to delay the harvesting of the crop after the treatment. Furthermore the quantity of percarboxylic acid applied need not be controlled with as great a degree of care as is required when using toxic chemicals although the application of a quantity of acid which will reduce the pH of the plant growth medium to a degree which adversely affects the growth of the plant should be avoided.

The processes of this invention find particular application in the treatment of crops such as tomato and soft fruit, particularly tomato, strawberry and vine fruit crops which have been affected by the growth of Botrytis cinerea, flowering plants such as carnations, particularly those which have been affected by the growth of Fusarium oxysporum, where the processes are especially advantageous in that they reduce or avoid any marking of the flower. They are also especially useful in the treatment of edible crops such as lettuce because the process can be applied shortly before the crop is harvested.

The processes may also find particular application in the treatment of cereal crops including wheat, barley, rye, oats, rice, maize, millet and sesame. They are especially valuable in the treatment of crops which are infected by the growth of Sclerotinia sclerotiorum but they may inhibit the growth of other organisms such as Septoria tritici (wheat leaf spot), Septoria nodorum (wheat glume blotch), Pseudocercosporella herpotrichiodes (eyespot), Rhizoctonia cerealis (sharp eyespot) and Pyrenophora teres (barley net blotch).

The peracids appear to be particularly effective in controlling the growth of organisms which are propagated by spores and can thus advantageously be used to control the growth of such organisms. Their use offers a particular advantage in that unlike some alternative treatments their use does not result in the evolution of a resistant strain of the organism.

Other crops of importance which may be treated according to our invention include sugar cane, root vegetable plants such as potato, carrot, parsnip, turnip, beetroot, sugar beet, radish, swede and mangel plants, brassicas including cabbages, broccoli, cauliflower and sprouts; pulses including peas, broad beans, french beans, runner beans, navy beans, kidney beans and lentils; curcubaceous plants including cucumbers, marrows, gourds and squashes; oilseed rape, cotton, coffee, cocoa, jute, tobacco, bananas, coconut palms, olives, alliums including onions, shallots, leeks, garlic, chives and spring onions, ground nuts, peanuts, sorghum, oil palm, roses, hemp, flax, lucerne, alfalfa, tea, and fruit including citrus fruits, apples, plums, peaches, nectarines, mangoes, pears, cherries, grapes, berries, currants, dates, figs, avocados, almonds and apricots.

The treatment process will normally be carried out by spraying the plant with an aqueous solution of the peracid. The preferred acid for use in the processes of this invention is peracetic acid. The per acids have been found to retain their activity when employed as a dilute solution eg. a solution comprising from 0.001 to 0.1 moles per litre of peracetic or perpropionic acid. Preferably the solution will comprise from 0.002 to 0.01 moles/litre of acid and most preferably from 0.002 t 0.007 moles/litre of acid. More dilute solutions may be employed but may be less effective while more concentrated solutions may be employed but these increase the possibility that the pH of the growth medium will be reduced to a level which will damage the growth of the plant.

The amount of solution which is used in the treatment process will vary with the nature of the organism and degree of control upon the growth of the organism which is desired. The treatment may be applied to a plant in which the level of pathogenic growth is not significant as a preventative treatment in which case the amount of acid applied may be relatively small but more usually it will be applied to a diseased plant in order to eradicate an existing pathogenic growth in which case the amount of acid applied will be relatively large (although it may be preferable to carry out the treatment using repeated treatments with a fraction of the total amount of acid to be applied).

The actual dosage of peracid acid to be applied may thus vary through a wide range but typically an amount of from 0.01 to 0.02 gms per square metre of peracid will be sufficient to combat the growth of adventitious organisms. The treatment may need to be repeated at intervals in order to prevent reinfection of the crop. Generally the treatment will remain effective in combatting the growth of adventitious organisms for a period of from 6 to 8 weeks.

The solutions of the percarboxylic acids will normally be prepared by dilution of a more concentrated solution of the peracid prior to application. The solutions of the peracid may be unstable on prolonged storage and the treatment solution will preferably be analysed prior to the treatment process in order to establish the concentration of the peracid in the treatment solution.

The solutions will thereby preferably not contain any additional ingredient which may tend to destabilise the percarboxylic acid, in particular the presence of significant quantities of dissolved salts is preferably avoided.

The concentrated solutions may be in a preferred embodiment comprise a wetting agent. A preferred group of wetting agents is those which exhibit some bactericidal activity, the most preferred wetting agent being an aromatic alkyl and especially benzene sulphonic acids. Examples of such acids which are useful include those wherein the aromatic nucleus has an alkyl substituent comprising from 8 to 16 carbon atoms such as docdecyl benzene sulphonic acid, and also those alkyl aromatic sulphonic acids which comprise a total of from 6 to 10 carbon atoms per molecule such as benzene, toluene, xylene and cumene sulphonic acids. The concentrates may also comprise any of the conventional stabilisers for percarboxylic acids such as 2,6 pyridine dicarboxylic acid and phytic acid.

The preferred concentrates for use in this invention are those which are described in our British Patent Application 2152377. Such concentrates comprise from 0.5 to 20%, preferably from 1.0 to 10.0% and more preferably from 2.0 to 7.0% by weight of peracid and from 10 to 50%, preferably 10 to 35%, and most preferably 15 to 25% by weight of hydrogen peroxide, the ratio of the weight of hydrogen peroxide to peracid preferably being in the range 2:1 to 10:1, more preferably in the range 4:1 to 7:1. Other concentrates may be used for example those described in British Patent 1561680 or other aqueous solutions comprising peracetic acid and hydrogen peroxide typically those containing from 12 to 20% by weight of peracetic acid and 10 to 18% by weight of hydrogen peroxide. Less preferably those concentrated products containing from 35 to 45% by weight of percarboxylic acid and from 40 to 55% by weight of carboxylic acid may be employed but since some of the concentrated products of this type may contain other components eg. sulphuric acid which may damage the plant their use may be disadvantageous.

The percarboxylic acid compositions may be used to treat crops in combination with other biocides, e.g. herbicides, fungicides, bactericides, insecticides and weed killers. Where such active ingredients can be mixed with the percarboxylic acid solution without destroying its activity such mixtures can be used in the processes of this invention. Similarly the compositions used in the process of this invention may contain other conventional ingredients of agricultural biocides such as wetting agents, adhesives, emulsifiers, suspending agents, thickeners, hormones and plant growth regulators and plant nutrients again provided that they do not deactivate the percarboxylic acid. It is preferred to avoid the use of additional ingredients which may leave a toxic residue on the plant or which must be washed from the crop since this detracts from one advantage of the process of this invention. The invention is illustrated by the following examples:-

Example 1

An aqueous concentrate comprising peracetic acid was made by mixing the following ingredients.

|  | Percent m/m |
|---|---|
| Acetic acid | 10.3 |
| Hydrogen peroxide (35% solution) | 70.9 |
| 2:6 Pyridine dicarboxylic acid | 0.015 |
| Dodecyl benzene sulphonic acid | 1.2 |
| Water | 17.585 |

The composition was mixed, left to stand at 50°C for 19 hours, cooled to ambient temperature and sampled prior to use to determine the peracetic acid content.

A 10-fold dilution of this concentrate was then tested for efficiency in controlling the following pathogens.

The pathogens used were obtained from standard isolates maintained under oil at Long Ashton Research Station:

(i) Septoria tritici (wheat leaf spot)
(ii) Septoria nodorum (wheat glume blotch)
(iii) Pseudocercosporella herpotrichoides (eyespot of cereals)
(iv) Rhizoctonia cerealis (sharp eyespot of cereals)
(v) Pyrenophora teres (barley net blotch)
(vi) Sclerotinia sclerotiorum

Initially, the 10-fold dilution of the concentrate were added to potato dextrose agar (PDA) plates, producing fungicide-amended agar in a range between 5000 ppm and 50 ppm (assuming 100% active ingredient). PDA-only plates were also made and acted as controls. Agar plugs of each pathogen were then placed centrally on to the plates, which were replicated 4 times.

After 3 days incubation at 20°C, the mycelial growth was measured (the diameter of the colony).

None of the pathogens grew at 5000ppm. but growth was found on all plates at 500 ppm or less. Subsequently, 2-fold dilutions of the concentrate were added to PDA, producing a range of concentrations between 5000 ppm and 500 ppm. The pathogens were applied to the agar, incubated, and measured as before.

N.B. The pathogen S. tritici does not produce a mycelium form, therefore a spore-suspension was made and applied to the agar plates as 'spread plates'. Therefore only an assessment of 'growth' or 'no growth' could be made.

The results were as follows:-

|  | 500ppm | 625ppm | 1250ppm | 2500ppm | 5000ppm | Control |
|---|---|---|---|---|---|---|
| S. tritici | growth | growth | 0 | 0 | 0 | growth |
| S. nodorum | 13 | 12.5 | 12.5 | 11 | 8 | 15.5 |
| P. herpotrichoides | 9.8 | 9.3 | 8 | 7.3 | 0 | 10 |
| R. cerealis | 31.3 | 26.5 | 20.3 | 0 | 0 | 35.5 |
| P. teres | 23.5 | 21.5 | 17.3 | 13 | 0 | 30.5 |
| S. sclerotiorum | 55 | 40.3 | 0 | 0 | 0 | 55 |

0 = no growth

Figures are mean of 4 replicates

| | MIC values (minimum inhibitory concentration) |
|---|---|
| S. tritici | 625-1250 |
| S. nodorum | >5000 |
| P. herpotrichoides | 2500-5000 |
| R. cerealis | 1250-2500 |
| P. teres | 2500-5000 |
| S. sclerotiorum | 625-1250 |

## Example 2

Assessment of the fungicidal activity of formulated peracetic acid against Fusariumoxysporum.

### Test Procedure:-

#### 1.1 Fungal Culture

Fusarium oxysporum was grown on Potato Dextrose Agar slope for 3 weeks at 20°C + 2°C.

#### 1.2 Preparation of Fungal Inoculum

20 ml of sterile 1/4 strength Ringers solution was added to culture on PDA slope and fungal mycelium agitated with sterile glass spreader. Resultant suspension was filtered through sterile glass wool and then further diluted 1:10 in 1/4 strength Ringers solution.
Two test inocula were prepared.
(i) 6:4 dilution in WHO hard water.
(ii) 6:4 dilution in 5% dry weight sterile yeast suspension prepared in WHO hard water (as Kelsey Sykes Capacity Test 1974).

#### 1.3 Dilution of concentrate.

The concentrate of Example 1 was diluted in WHO hard water to give range of concentrations from 0.1 - 1.25%v/v. Dilutions were dispersed into sterile containers in 2.5 ml amounts.

1.4 Procedure:

Test was carried out at 20°C + 2°C. To 2.5 ml of the diluted concentrate was added 2.5 ml of relevant test inocula. Suspension was mixed well. At contact times of 5, 10 and 30 minutes 0.1 ml was sampled and spread onto Potato Dextrose Agar plate. Inoculated plates were incubated at 20°C + 2°C for 3 weeks. Colonies of <u>Fusarium oxysporum</u> were counted and recorded.

## Results

### 1. <u>WHO Hard Water/No Organic Soil Present</u>

| Conc$^n$ % | Time (min) | | |
|---|---|---|---|
| | 5 | 10 | 30 |
| 0.2 | $7.0 \times 10^2$ | $2.7 \times 10^2$ | $3.0 \times 10^1$ |
| 0.25 | $<10$ | $<10$ | $<10$ |
| 0.5 | $<10$ | $<10$ | $<10$ |
| 0.75 | $<10$ | $<10$ | $<10$ |
| 1.0 | $<10$ | $<10$ | $<10$ |
| 1.25 | $<10$ | $<10$ | $<10$ |

### 2.

| Conc$^n$ % | Time (min) | | |
|---|---|---|---|
| | 5 | 10 | 30 |
| 0.1 | TNTC | TNTC | TNTC |
| 0.25 | TNTC | TNTC | TNTC |
| 0.5 | $2.0 \times 10^1$ | 10 | 10 |
| 0.75 | 10 | 10 | 10 |
| 1.0 | 10 | 10 | 10 |
| 1.25 | 10 | 10 | 10 |

(N.B. TNTC denotes Too Numerous To Count)

**Claims**

1. A process for the treatment of growing plants in order to combat the growth of adventitious organisms which comprises treating the plant with an effective quantity of peracetic acid or perpropionic acid.

2. A process according to claim 1 characterised in that the treatment is carried out using an aqueous solution of the peracid.

3. A process according to either of claims 1 or 2 characterised in that the solution comprises from 0.01 to 0.1 moles per litre of the peracid.

4. A process according to claim 3 characterised in that the solution comprises from 0.002 to 0.01 moles per litre of the peracid.

5. A process according to any of the preceding claims characterised in that the treatment process is carried out using a solution of a peracid which has been produced by dilution of a concentrate comprising from 0.5 to 20% by weight of peracid and from 10 to 50% by weight of hydrogen peroxide.

6. A process according to any of claims 1 to 4 characterised in that the treatment process is carried out using a solution of a peracid which has been produced by the dilution of a concentrate comprising from 35 to 45% by weight of peracid and from 40 to 55% by weight of the corresponding carboxylic acid.

7. A process according to any of the preceding claims characterised in that the peracid is applied to a growing crop in an amount of from 0.01 to 0.2 gms per square metre.

8. A process according to any of the preceding claims characterised in that the peracid is peracetic acid.

9. A process according to any of the preceding claims characterised in that the adventitious organism is a fungal or microbial pathogen.

10. A process according to claim 9 characterised in that the organism is Fusariumoxysporum.

11. A process according to claim 10 characterised in that the plant is a tomato plant.

12. A process according to claim 9 characterised in that the organism is Sclerotinia sclerotiorum.

13. A process according to claim 12 characterised in that the plant is a cereal crop.

14. A plant which has been treated by a process according to any of claims 1 to 13.

15. A composition adapted for use in the treatment of growing plants which comprises peracetic acid or perpropionic acid and a horticulturally or agriculturally acceptable diluent carrier and/or solvent.

16. A composition adapted for use in the treatment of growing plants which comprises peracetic or perpropionic acid in combination with at least one other biocide.

17. A composition according to claim 16 which comprises at least one agriculturally acceptable wetting agent, adhesive, emulsifier, suspending agent, thickener, hormone, plant growth regulant or plant nutrient.